Europäisches Patentamt

European Patent Office

Office européen des brevets

(11) Veröffentlichungsnummer: **0 307 416 B1**

# EUROPÄISCHE PATENTSCHRIFT

(45) Veröffentlichungstag der Patentschrift: **28.10.92**

(51) Int. Cl.⁵: **F16L 55/18**

(21) Anmeldenummer: **87907413.6**

(22) Anmeldetag: **27.11.87**

(86) Internationale Anmeldenummer:
**PCT/CH87/00162**

(87) Internationale Veröffentlichungsnummer:
**WO 88/07645 (06.10.88 88/22)**

(54) **SANIERUNGSMASCHINE ZUM AUSBESSERN UND ABDICHTEN VON NICHT BEGEHBAREN LEITUNGEN.**

(30) Priorität: **31.03.87 CH 1222/87**

(43) Veröffentlichungstag der Anmeldung:
**22.03.89 Patentblatt 89/12**

(45) Bekanntmachung des Hinweises auf die
Patenterteilung:
**28.10.92 Patentblatt 92/44**

(84) Benannte Vertragsstaaten:
**AT BE DE FR GB IT LU NL SE**

(56) Entgegenhaltungen:
**EP-A- 0 029 343**
**WO-A-86/03818**
**GB-A- 1 243 613**
**GB-A- 2 094 926**

(73) Patentinhaber: **Sika Robotics AG**
**Industriestrasse**
**CH-8627 Grüningen(CH)**

(72) Erfinder: **Sigel, Alwin**
**Nussberg**
**CH-8418 Schlatt(CH)**

(74) Vertreter: **Schwabe - Sandmair - Marx**
**Stuntzstrasse 16**
**W-8000 München 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft eine fernsteuerbare Maschine zum Ausbessern und/oder Abdichten von Rohrleitungen, mit einem mit Laufrädern versehenen, in der Rohrleitung fahrbaren Fahrgestell, welches gestoßen oder motorisch angetrieben werden kann, und auf welchem über Zuleitungen versorgte unterschiedliche Geräte, nämlich Bearbeitungs- und/oder Reinigungswerkzeuge und/oder Füllmaterial-Abgabevorrichtungen und/oder Fernsehkameras, auswechselbar anbringbar sind, wobei auf dem Fahrgestell eine zu dessen Fahrtrichtung parallele Welle gelagert ist, die von einem Antriebsmotor um ihre Achse drehbar ist und an deren einem Ende Halterungselemente für jeweils eines oder mehrere der Geräte montiert sind, von welchen Halterungselemente wenigstens eines zum etwa radialen Verschieben des Gerätes bzw. der Geräte bewegbar ist. Eine derartige fernsteuerbare Maschine ist in dem Dokument WO 86/03818 beschrieben.

Bei der bekannten Maschine ist vorn eine Fernsehkamera vorgesehen, auf welche ein Bearbeitungskopf mit einem Hydraulikmotor und einer radial ausfahrbaren Werkzeugantriebswelle folgt, und hieran schließt sich das Fahrgestell an, auf welchem ein Hydraulikmotor und ein Getriebe vorgesehen sind, über welche die zur Fahrtrichtung parallele Welle gedreht wird, wodurch sich entsprechend der Bearbeitungskopf und die Fernsehkamera mitdrehen. Zur Versorgung der Maschine sind zumindest zwei Zuleitungen vorgesehen. Die eine Zuleitung enthält einen Wasserschlauch und um diesen herum Kabel für die Fernsehkamera und die Beleuchtung. Die andere Zuleitung enthält verschiedene Leitungen für die Hydraulik-Antriebsflüssigkeit zu den verschiedenen Hydraulikmotoren, sowie zwei Leitungen für die beiden Komponenten eines Kunststoffgels, die in einem Mischkopf zusammengemischt werden. Gegebenenfalls kann beispielsweise noch eine gesonderte Druckluftleitung vorgesehen werden.

Während der Bearbeitungskopf durch die Drehung der zur Fahrtrichtung des Fahrgestells parallelen Welle an die jeweils gewünschte Umfangsposition in der Rohrleitung gebracht wird, ist ein gesonderter Vorschubzylinder vorgesehen, der den Hydraulikmotor zum Antrieb der Werkzeugantriebswelle in radialer Richtung verschiebt. Bei der verhältnismäßig hohen erforderlichen Anzahl einzelner Zuleitungen für die jeweiligen Geräte ergeben sich Schwierigkeiten, da diese Geräte ja im Betrieb gedreht werden.

In dem Dokument GB-A-1 243 613 ist eine Maschine beschrieben, die hauptsächlich zur inneren Abdichtung der Verbindungsstellen von Gashauptleitungen dient, die einen Durchmesser von 15 bis 46 cm aufweisen. Bei dieser Maschine sind axial hintereinander eine Detektoreinrichtung für Rohrverbindungsstellen vorgesehen, ein Behälter für ein Grundierungsmittel, ein Gebläse, eine mit diesem verbundene rotierende Reinigungsvorrichtung, ein Primärantriebsteil, und ein Dichtmittelspeicherbehälter. Für das Gebläse ist eine sich in Axialrichtung erstreckende hohle Drehwelle vorgesehen, die durch einen Elektromotor angetrieben wird. Innerhalb der Drehwelle ist eine stationäre Hohlwelle vorgesehen. Durch die stationäre Hohlwelle erstrecken sich ein Elektrokabel zur Versorgung des Elektromotors und ein Rohr zur Durchleitung von Druckluft.

Der Erfindung liegt die Aufgabe zugrunde, eine fernsteuerbare Maschine der eingangs geschilderten Gattung zu schaffen, die bei einfacher Konstruktion eine reduzierte Störanfälligkeit aufweist und mit vergleichsweise geringem Gesamtdurchmesser hergestellt werden kann.

Der Erfindung liegt die Erkenntnis zugrunde, daß eine derartige Maschine zum Ausbessern und/oder Abdichten von Rohrleitungen eine Vielzahl von Arbeiten ausführen können muß, nämlich zunächst die Vorbereitung einer Sanierung, bei welcher die schadhaften Stellen bearbeitet und gereinigt werden müssen, also Arbeiten wie Ausbohren, Ausbürsten, Waschen und Absaugen, und dann die eigentliche Sanierung, zu welcher das Einbringen der diversen Füllmaterialien wie Kunststoffe, Kleber oder weitere Stoffe gehört, welche von der Zementchemieindustrie für diese speziellen Anwendungen geschaffen wurden. Alle diese genannten Arbeiten erfordern eine Vielzahl von Zuleitungen, die darüber hinaus noch einfach und schnell ausgewechselt werden können müssen. Darüber hinaus muß eine derartige Sanierungsmaschine auch noch die Fähigkeiten haben, daß sich das Werkzeug in drei Dimensionen bewegen lassen können muß, wozu ein Fahren in axialer Richtung der Rohrleitung gehört, ein Drehen um die Rohrleitungsachse, und ein radiales Verschieben des Werkzeugs oder des Werkzeughalters von der Rohrmitte zur Rohrleitungswand oder umgekehrt. Mit diesen Bewegungen müssen Produkteinspritzungen oder Bearbeitungen an einer bestimmten Stelle möglich sein. Hierbei müssen die zahlreichen, zum Teil dicken Zuleitungen durch die enge Rohrleitung an der platzraubenden Maschine "vorbeigebracht" werden, und auch an dem sich drehenden Werkzeughalter, welcher sich am Kopf des Fahrzeuges befindet, und dort angeschlossen werden, wobei nach einer Lösung gesucht wurde, bei welcher reparaturanfällige und komplizierte Drehkupplungen nicht erforderlich wären.

Die Aufgabe wird durch eine fernsteuerbare Maschine der eingangs genannten gattungsgemäßen Art gelöst, bei welcher die Welle eine Hohlwelle ist, in der die Zuleitungen zu den Geräten angeordnet sind, und bei welcher die Zuleitungen bei einer Drehung der Hohlwelle gemäß einem begrenzten Drehwinkelbereich eine Torsionsdrehung ausführen.

In vorteilhafter Weise lassen sich daher bei der vorliegenden Erfindung störranfällige und komplizierte Drehkupplungen vermeiden, da die Zuleitungen zentral durch die Hohlwelle der Maschine geführt werden. Beim Stand der Technik wurden die Zuleitungen ja außen um die Maschine herumgeführt, teilweise im Zick-Zack, so daß beim Drehen des Arbeitskopfes sogar eine Verwicklungsgefahr bestand, und auf jeden Fall eine Drehkupplung oder mehrere Drehkupplungen erforderlich waren. Bei der Maschine gemäß der vorliegenden Erfindung wird dagegen die Verdrehung von der jeweiligen Zuleitung selbst im Bereich der Hohlwelle und insbesondere hinter der fernsteuerbaren Maschine aufgefangen.

Bei einer vorteilhaften Ausgestaltung der Erfindung umfassen die Zuleitungen Produktleitungen für Hydraulik, Wasser, Luft, Abdichtungsmaterial und die Zuleitungskabel für eine Fernsehkamera. Die Drehung der Hohlwelle ist vorzugsweise elektronisch gesteuert.

Wenn die Hohlwelle an ihrem einen Ende einen radialen Flansch trägt, auf welchem die Halterungselemente montiert sind, so erhält man einen einfachen und vorteilhaften, motorisch drehbaren Fahrzeugträger zur Plazierung der Werkzeuge oder Sanierungsmittel.

Das Halterungselement bzw. jedes bewegbare Halterungselement ist vorzugsweise ein Arm eines Winkelhebels, der um eine zur Achse der Hohlwelle etwa senkrechte Achse schwenkbar ist und an dessen anderem Arm eine zur Achse der Hohlwelle etwa parallele, von einem Antriebsmotor axial bewegbare Schubstange angreift. Mit dieser einfachen und daher wenig störanfälligen Konstruktion läßt sich auf einfache Weise die Radialbewegung der Halterungselemente und damit der hieran angeordneten Geräte realisieren.

Vorteilhafterweise ist an dem genannten einen Ende der Hohlwelle zusätzlich ein Träger für eine nicht radial verschiebbare Übersichts-Fernsehkamera montiert. Zusätzlich zu dieser allgemeinen Übersichts-Kamera ist vorteilhafterweise auf einer Werkzeugplatte eine zusätzliche Detail-Kamera angebracht, mit welcher die zu bearbeitende Stelle aus nächster Nähe betrachtet werden kann.

Vorzugsweise sind - zumindest für Rohrleitungen mit einem Durchmesser von mehr als 30 cm - die Achsen der Lauräder mit Einzelantriebsmoto-ren versehen. Jedes Rad erhält daher einen eigenen Motor, so daß ein Einzelradantrieb vorgesehen ist. Für Rohrleitungen mit einem Durchmesser von 30 cm und weniger kann auch eine Maschine vorgesehen sein, welche beispielsweise von einem Zusatzmotorwagen geschoben wird und daher über keine eigenen Antriebsmotoren für die Räder verfügt.

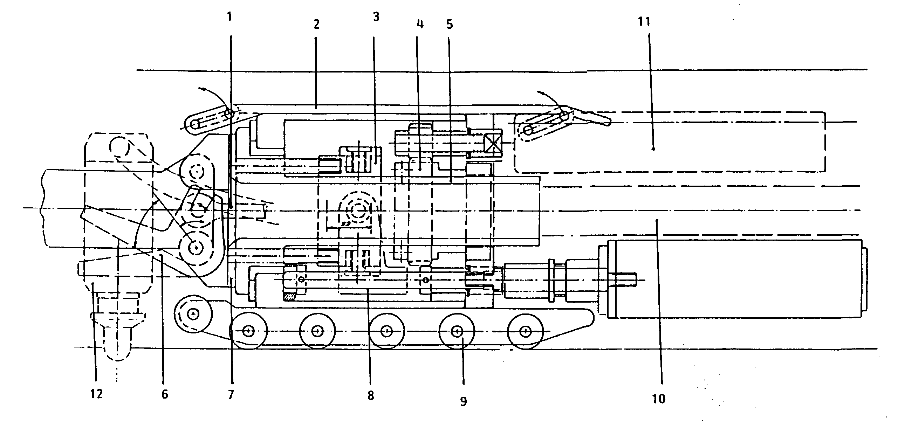

Die Erfindung wird nachstehend anhand eines zeichnerisch dargestellten Ausführungsbeispiels im Zusammenhang mit der einzigen Figur näher erläutert.

In der Zeichnung ist eine Aufsicht auf eine kleinere fernsteuerbare Maschine gemäß der vorliegenden Erfindung gezeigt; aus der Zeichnung wird deutlich, daß die Zuleitungen 10 für Hydraulik, Wasser, Luft, Abdichtungsmaterial und die Zuleitungen (Kabel) für die Fernsehkamera usw. nicht mehr außen um die Maschine herumgeführt sind wie beim Stand der Technik, sondern zentral durch die Maschine hindurchgehen. Bei einer Drehung des Ganzen

Drehelementes, inkl. Drehtisch 7 samt zwei "Entenschnäbeln" 6, auf welchen die Werkzeuge montiert werden können, und der Fernsehkamera, wird die Produkteleitung 10 jetzt nicht mehr um das Fahrzeug gewickelt, sondern die ganze Leitung bekommt nun einfach eine kleine Torsions-Drehung. Diese Torsions-Drehung wird mit einem Getriebemotor erreicht, welcher über einen Drehkranz 4 das zentrale Drehelement 5 zusammen mit den Produkteleitungen 10, dreht. Gesteuert wird diese Drehung über eine elektronische Steuerung und Schaltventile im einem Steuerbehälter 11. Auf diese Art kann mit dem vorliegenden neuen Gerät eine Drehung vom mindestens 420° erreicht werden, weil eine so grosse Verdrehung ohne weiteres vom Rest der Produkteleitung zwischen einem Abroller und den Maschine, also dem Roboter-Fahrzeug, aufgefangen werden kann.

Wie erwähnt ist an dem zentralen Drehelement 5 ein Drehtisch 7 befestigt, auf dem zwei drehbare Hebelarme oder "Entenschnäbel" 6 montiert sind. Auf diesen "Entenschnäbeln" 6 können diverse Werkzeuge bzw. Geräte wie Bohrer, Spritzdüse, Fernsehkamera etc. montiert werden. Auf der Zeichnung abgebildet sieht man ein pneumatisches Bohrgerät 12 mit Diamantbohrer. Es dreht somit bei einer Drehung des Drehelementes 5 mit den Produkteleitungen 10 ebenfalls der ganze Drehtisch 7 samt den darauf montierten Instrumenten mit. Nun ist nur noch eine radiale Bewegung der "Entenschäbel" 6 nach aussen notwendig, damit die auf ihnen montierten Geräte die Rohrleitungsinnenwand, welche repariert werden muss, erreichen können. Dies wird dadurch erreicht, dass die beiden "Entenschnäbel" 6, welche bewegliche Hebelarme darstellen, durch Vorschubstangen 1 gedreht werden können. Die beiden Vorschubstangen werden durch einen Getriebemotor über eine Hülse 3 in eine Schubbewegung versetzt.

Wie bereits erwähnt, wird das Roboter-Fahrzeug mit zwei Kameras versehen. Die erstere von diesen beiden ist eine grosse Uebersichtskamera, welche nach vorn geschwenkt werden kann, um in Fahrtrichtung sehen zu können. Sie kann aber auch rückwärts gedreht werden, damit das ganze Roboter-Fahrzeug bei der Arbeit von vorne betrachtet werden kann. Auf diese Weise können somit alle Bewegungen der beiden "Entenschnäbel" 6 samt den darauf montierten Instrumenten beobachtet werden. Nebst dieser grossen Uebersichtskamera wird an den "Entenschnäbeln" 6 ebenfalls eine kleinere Detail-Kamera montiert, mit welcher sich die entsprechenden Bearbeitungen aus der Nähe genau betrachten lassen, wie zum Beispiel das Bohren oder Einspritzen einer Kunststoff-Abdichtungsmasse.

Wie die vorangehende Beschreibung gezeigt hat, ist es mit den beweglich montierten "Entenschnäbeln" 6, den Vorschubstangen 1 und den zentral durch das Roboter-Fahrzeug hindurchgeführten Produkteleitungen 10 gelungen, die bis jetzt auf dem Markt erhältliche teureren Apparaturen durch eine sehr einfache Konstruktion zu ersetzen. Dies hat zur Folge, dass inskünftig die Produktionskosten für das ganze Gerät gewaltig gesenkt werden können und dass die Reparatur-Anfälligkeit rapid abnehmen wird.

**Patentansprüche**

1. Fernsteuerbare Maschine zum Ausbessern und/oder Abdichten von Rohrleitungen, mit einem mit Laufrädern (9) versehenen, in der Rohrleitung fahrbaren Fahrgestell, welches gestoßen oder motorisch angetrieben werden kann und auf welchem über Zuleitungen (10) versorgte unterschiedliche Geräte, nämlich Bearbeitungs- und/oder Reinigungswerkzeuge und/oder Füllmaterial-Abgabevorrichtungen und/oder Fernsehkameras, auswechselbar anbringbar sind, wobei auf dem Fahrgestell eine zu dessen Fahrtrichtung parallele Welle (5) gelagert ist, die von einem Antriebsmotor um ihre Achse drehbar ist und an deren einem Ende Halterungselemente (6) für jeweils eines oder mehrere der Geräte montiert sind, von welchen Halterungselementen (6) wenigstens eines zum etwa radialen Verschieben des Gerätes bzw. der Geräte bewegbar ist, dadurch **gekennzeichnet,** daß
    a) die Welle (5) eine Hohlwelle ist, in der die Zuleitungen (10) zu den Geräten angeordnet sind, und
    b) die Zuleitungen (10) bei einer Drehung der Hohlwelle (5) gemäß einem begrenzten Drehwinkelbereich eine Torsionsdrehung ausführen.

2. Maschine nach Anspruch 1, dadurch **gekennzeichnet,** daß die Zuleitungen (10) Produktleitungen für Hydraulik, Wasser, Luft, Abdichtungsmaterial und die Zuleitungskabel für eine Fernsehkamera umfassen.

3. Maschine nach Anspruch 1, dadurch **gekennzeichnet,** daß die Drehung der Hohlwelle (5) elektronisch gesteuert ist.

4. Maschine nach Anspruch 1, dadurch **gekennzeichnet,** daß die Hohlwelle (5) an ihrem genannten einen Ende einen radialen Flansch trägt, auf welchem die Halterungselemente (6) montiert sind.

5. Maschine nach Anspruch 1 oder 4, dadurch **gekennzeichnet,** daß das bzw. jedes bewegbare Halterungselement (6) ein Arm eines Winkelhebels ist, der um eine zur Achse der Hohlwelle (5) etwa senkrechte Achse schwenkbar ist und an dessen anderem Arm eine zur Achse der Hohlwelle (5) etwa parallele, von einem Antriebsmotor axial bewegbare Schubstange (1) angreift.

6. Maschine nach einem der Ansprüche 4 oder 5, dadurch **gekennzeichnet,** daß an dem genannten einen Ende der Hohlwelle (5) zusätzlich ein Träger für eine nicht radial verschiebbare Übersichts-Fernsehkamera montiert ist.

7. Maschine nach einem der Ansprüche 4 bis 6, dadurch **gekennzeichnet,** daß die Achsen der Laufräder (9) mit Einzelantriebsmotoren versehen sind.

**Claims**

1. A remote-controlled machine for repairing and/or sealing conduits -- with a carriage equipped with traveling wheels (9) and capable of being manoeurvred inside the conduit; said carriage being pushed or motor-driven; various devices, i.e. working/machining and/or cleaning tools and/or sealing compound dispenser devices and/or video cameras, being supplied via supply lines (10) and being mounted to said carriage in an interchangeable manner; with a shaft (5) seated on the carriage in a direction parallel to the direction of travel of the carriage; said shaft capable of being turned about its axis by a drive motor; with securing elements (6) mounted to one end of said shaft for one or several of the devices; of said securing elements (6) at least one being movable for the purpose, for example, of radially shifting the device or devices, -- **wherein**

a) the shaft (5) is a hollow shaft in which the supply lines (10) to the devices are located, and

b) the supply lines (10) effect a torsional rotation in keeping with a limited angle of rotation whenever the hollow shaft (5) is rotated.

2. A machine as claimed in claim 1 **wherein** the supply lines (10) comprise media lines for the hydraulic components, water, air, sealing compound and lead-in cables for a video camera.

3. A machine as claimed in claim 1 **wherein** the rotation of the hollow shaft (5) is electronically controlled.

4. A machine as claimed in claim 1 **wherein** the hollow shaft (5) bears a radial flange on said one end, a securing element (6) being mounted to said flange.

5. A machine as claimed in claim 1 or 4 **wherein** the or each movable securing element (6) forms a lever arm of an elbow lever; said lever capable of being swivelled about an axis approximately vertical to the axis of the hollow shaft (5); with a connecting rod (1) engaging on the other arm of said elbow lever, said connecting rod being positioned approximately parallel to the axis of the hollow shaft (5) and capable of being moved axially by a drive motor.

6. A machine as claimed in claim 4 or 5 **wherein** on said one end of the hollow shaft (5) a support is additionally mounted for a non-radially sliding complete-view video camera.

7. A machine as claimed in one of the claims 4 to 6 **wherein** the axles of the traveling wheels (9) are provided with individual direct-drive motors.

**Revendications**

1. Machine télécommandée pour réparer et/ou étancher les conduites rigides constituée d'un châssis muni de roues de roulement (9) pouvant se déplacer dans la conduite, poussé ou propulsé par moteur, sur lequel divers appareils, à savoir outils d'usinage et/ou de nettoyage, dispositifs de distribution de matériaux de colmatage, caméras d'observation peuvent être montés de manière amovible. Un arbre (5) parallèle à la direction du déplacement est logé sur le châssis, animé d'un mouvement de rotation autour de son axe par un moteur. A une de ses extrémités sont montés des organes de fixation (6) prévus respectivement pour un ou plusieurs des appareils. Parmi ces organes de fixation (6), un au moins est mobile pour pouvoir déplacer l'appareil ou les appareils dans le sens radial. La machine est **caractérisée** par le fait que,

a) l'arbre (5) est creux, à l'intérieur duquel sont disposées les conduites d'amenée (10) alimentant les appareils, et

b) ces conduites d'amenée (10) exécutent une torsion dans une plage angulaire limitée, lors d'une rotation de l'arbre (5).

2. La machine, selon la revendication 1, est **caractérisée** par le fait que, les conduites d'amenée (10) comprennent celles du produit pour l'hydraulique, l'eau, l'air, le matériau de colmatage et le câble d'amenée de la caméra d'observation.

3. La machine, selon la revendication 1, est **caractérisée** par le fait que, la rotation de l'arbre creux (5) est commandée électroniquement.

4. La machine, selon la revendication 1, est **caractérisée** par le fait que, l'arbre creux (5) porte à son extrémité mentionnée une bride radiale sur laquelle sont montés les organes de fixation (6).

5. La machine, selon la revendication 1 ou 4, est **caractérisée** par le fait que, le ou chacun des organes de fixation mobiles (6) est le bras d'un levier coudé pouvant pivoter autour d'un axe à peu près perpendiculaire à l'axe de l'arbre (5) tandis que l'autre bras est attaqué par une bielle (1) mobile dans le sens axial, à peu près parallèle à l'axe de l'arbre (5), entraînée par moteur.

6. La machine, selon l'une des revendications 4 ou 5, est **caractérisée** par le fait que, un support est monté additionnellement à l'extrémité mentionnée de l'arbre (5) pour une caméra d'observation d'ensemble pouvant être déplacée dans un sens non radial.

7. La machine, selon l'une des revendications 4 à 6, est **caractérisée** par le fait que, les axes des roues de roulement (9) sont munis de moteurs d'entraînement individuels.